# EUROPEAN PATENT APPLICATION

(11) **EP 1 153 827 A1**
(43) Date of publication of application: **14.11.2001**
(21) Application number: 01109512.2
(22) Date of filing: 17.04.2001
(51) Int. Cl.: B62K 25/02

(54) **Quickly demountable hub set for a cycle wheel**

(30) Priority: 18.04.2000 EP 00830295
(71) Applicant: Rightside di Rizzuti & C.SNC, 22060 Carugo (Como) (IT)
(72) Inventor: Cavallari, Bruno, 10095 Grugliasco (Torino) (IT); Rizzuti, Alessandro, 10090 Rosta (Torino) (IT)
(74) Representative: Robba, Pierpaolo

(57) **Abstract**

A quickly demountable hub assembly for a cycle wheel mounted on the arm of a single-tube fork (3; 103), comprising: a body (2; 102) which has an axial bore (10; 110) including an axial conical seat (11; 111) and on which the cycle wheel is mounted; a support (20; 120) comprising a cylindrical portion (21; 121) mounted on the arm of said single-tube fork and bearing at least one sprocket wheel for the chain, and a conical portion (22; 122) which can be fitted into said conical seat (11; 111) and has a head equipped with means (19; 119) for the engagement of a closing member, said closing member being capable of taking an engagement position in which the body and the support are joined together, and a release position in which the body can be released from said support.

## Description

The present invention concerns an improved quickly demountable hub set for a cycle wheel having a single-arm fork and a conventional chain transmission mechanism.

The invention finds its particular and advantageous application in the rear wheel of a bicycle, as it will be disclosed in more detail hereinafter, but this is not to be taken in limiting sense, since the invention can also be applied to the front wheel of bicycles and light motor cycles.

Bicycles are known having a frame provided with so called single-arm forks, that is wheel bearing members that are shaped as a single cantilevered arm instead of having a fork structure with two arms of which the ends engage the ends of the wheel hub.

Bicycles equipped with a system for quickly demounting both the front and the rear wheels are also known and wide spread, see for instance US-A-4 906 053. They are particularly advantageous for a quick wheel substitution, for instance for the tube repair or the bicycle transport, e.g. on a motor vehicle roof.

A drawback of the known quick demounting systems is that, to remove the rear wheel, it is necessary to loosen the transmission chain and take it off from the free wheel. The operation is not easy and makes demounting time longer. Moreover, it is often necessary also to loosen the brake linings or shoes which, in the known systems, interfere with the removal of the wheel from the fork.

The object of the present invention is to overcome the above mentioned limits of the prior art, and in particular to provide a quickly demountable hub assembly for a cycle wheel which allows removing the wheel without interventions on the chain.

These objects are attained by an improved quickly demountable hub assembly for a cycle wheel according to claim 1.

Further advantageous features are the subject matter of the dependent claims.

The invention will now be described with reference to the accompanying drawings, relating to preferred embodiments of the invention, devoid of any limiting character, in which:
- Fig. 1 shows the hub assembly in mounted condition, according to a first embodiment of the invention;
- Fig. 2 shows the hub assembly of Fig. 1 in demounted condition;
- Fig. 3 shows the hub assembly in mounted condition, according to a second embodiment of the invention; and
- Fig. 4 is enlarged view of a portion of the hub assembly of Fig. 3.

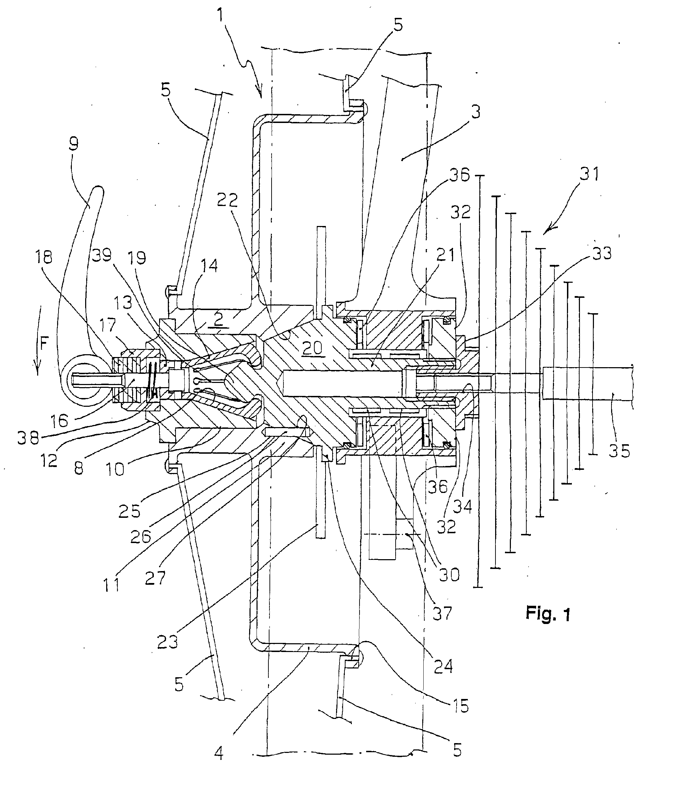

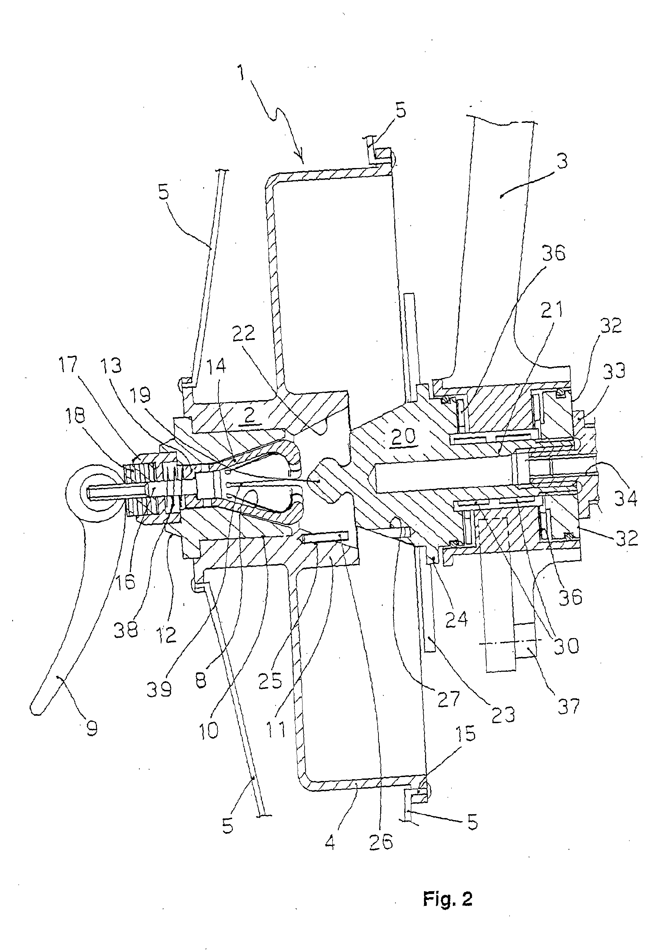

With reference to Figs. 1 and 2, the assembly according to the invention comprises a hub 1, connected to arm 3 of the single-arm fork of a bicycle frame.

Hub 1 comprises a body 2 and a hollow cylindrical portion or bell 4, of which the turned peripheral edge has holes 15 into which wheel spokes 5 engage. Body 2 has formed therein an axial bore with a cylindrical central portion 10 joined with a conical portion or seat 11 into which a support 20 fits. Said support 20 includes a conical engagement portion 22 joined with a cylindrical portion 21. Cylindrical portion 21 is axially bored and is mounted on arm 3 of the single-arm fork through roller bearings 30. Moreover, sprocket wheel set 31 for the chain transmitting motion from the pedals is mounted on said cylindrical portion 21.

Support 20 is moreover secured to arm 3 through a left-thread ring nut 32 and a right-thread lock nut 33 which is screwed into the axial bore provided in portion 21 of support 20. Lock nut 33 has a threaded bore 34 for fastening a pin 35 onto which the derailleur for the speed gear (not shown) is mounted. Said derailleur is also secured to arm 3 of the single-arm fork so that its rotation during rotation of hub 1 is prevented.

Two roller thrust bearings 36 are moreover arranged between arm 3 and support 20 and ring nut 32.

Support 20 fits into conical seat 11 and it is retained in body 2 through an enlarged head 19 which engages the jaws of a resilient clamp 8. Clamp 8 is mounted in bore 10 through a hollow cylindrical sleeve 12 screwed in bore 10 and having internally a cylindrical portion 13 and a conical portion 14 where resilient clamp 8 is housed.

Preferably resilient clamp 8 is a substantially bell-shaped metal member and has a set of slits 39 allowing its expansion and contraction. Clamp 8 is controlled through a cam lever 9 pivotally mounted at the end of a tie rod 16 secured at one end of clamp 8 and projecting from hub 1. A spring 38 is wound on tie rod 16.

A ring nut 17, preferably made of aluminium and screwed into sleeve 12 or formed integral therewith, and a deformable plastic insert 18 are interposed between the cam portion of lever 9 and portion 13 of sleeve 12.

Lever 9 can be rotated by about 180°, thereby exerting an axial displacement on clamp 8 and, consequently, on support 20 within body 2.

Support 20 has a circumferential portion 24 for the fastening of disk 23 of the disk brake, and the tail portion of fork arm 3 has holes 37 for the fastening of the brake clamp (not shown). Three pins 26 arranged at 120° relative to each other project from peripheral holes 25 provided on the periphery of body 2, in order to allow the coupling with corresponding circular seats 27 provided in support 20, when the latter is being secured to hub 1. Advantageously, the number of circular seats 27 is such that those seats are arranged side by side to allow automatic centring of the hub during mounting.

According to the invention, the match and the movement between the two coupled members, namely body 2 and support 20, which conventionally are obtained through the use of a key, are ensured by the male-female toothing system consisting of the aforementioned pins 26 co-operating with circular seats 27. Such a system allows complying with a proportional rotation ratio between the two members, and moreover it does not limit the coupling to a single position, thereby making the wheel replacement operation still faster.

Hereinafter the demounting of the hub assembly according to the invention will be described. Such demounting comprises, in two simple steps, the actuation of cam lever 9 and the wheel removal from the hub.

By moving lever 9 from the position shown in Fig. 1 to the position shown in Fig. 2 (arrow F), lever 9 is released, support 20 and body 2 are decoupled and axially shifted to the right with reference to the drawings, and head 13 of support 20 can be removed from clamp 8 (which can now expand) by pulling the wheel to the left with reference to the drawings.

Conversely, when mounting the wheel, head 13 of support 20 can be inserted into clamp 8 and, by acting in the opposed direction to that shown by arrow F, clamp 8 will be closed, thereby bringing the hub to the condition shown in Fig. 1, in which the conical surfaces of support 20 and body 2 co-operate for fastening the different components.

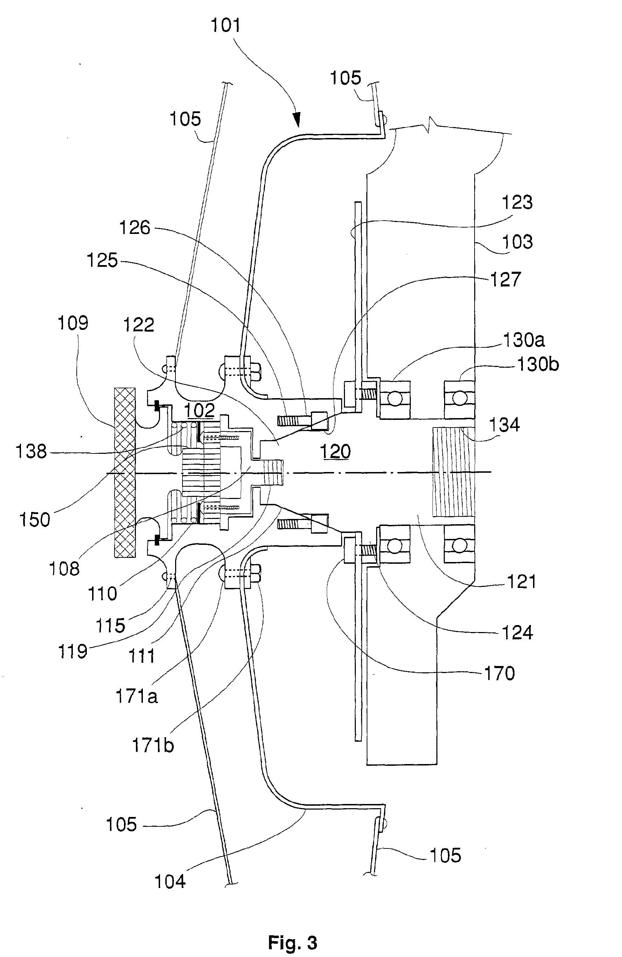

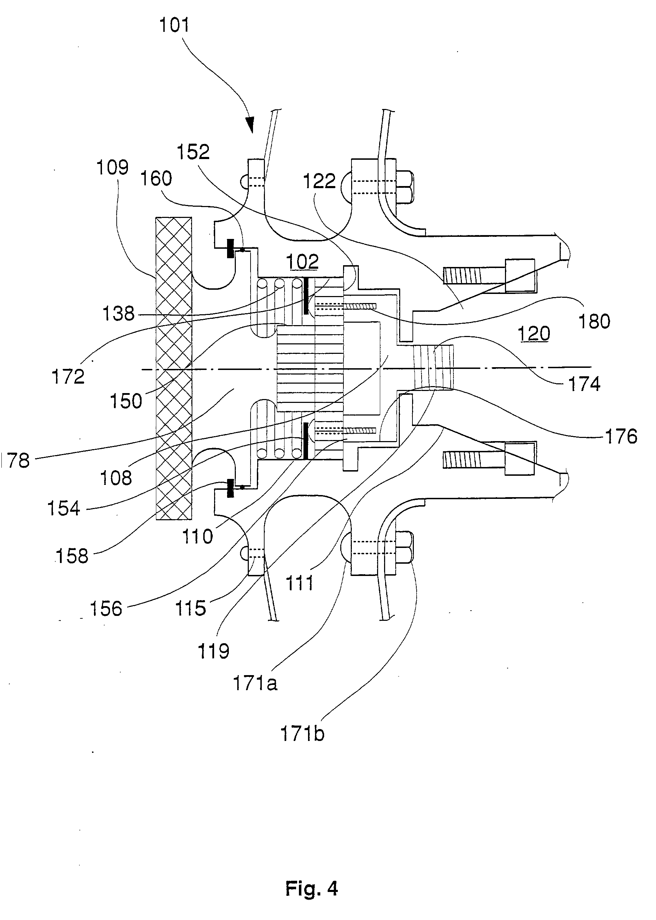

Referring now to Figs. 3 and 4, showing a second embodiment of the hub according to the invention, a hub 101 comprises a body 102 which has secured thereto, through screws 171a and nuts 171b, a hollow cylindrical portion or bell 104 on the turned peripheral edge which is engaged by the ends of wheel spokes 105. Other wheel spokes 105 engage a circumferential edge 115 in body 102.

Body 102 has formed therein an axial bore with a cylindrical central portion 110 joined with a conical portion or seat 111 into which a support 120 fits. Said support 120 includes a conical engagement portion 122 joined with a cylindrical portion 121. Cylindrical portion 121 has a threaded axial bore 134 and is mounted on arm 103 of the single-arm fork through ball bearings 130a, 130b. Thanks to said axial bore 134, the sprocket wheel set for the chain transmitting the motion from the pedals to the cycle wheel can be mounted on said cylindrical portion 121, through a suitable fastening member of known type.

Support 120 fits into conical seat 111 and it is fastened to body 102 by a ring nut 108 arranged in a seat 176 of body 102 and provided with a threaded shaft 174 which fits into a bore 119 in the head of support 120.

Advantageously, support 120 can be easily removed from body 102 by acting on ring nut 108 that can rotate within seat 176. Thus, threaded shaft 174 is unscrewed from bore 119 and body 102 can be easily separated from support 120.

Rotation of ring nut 108 can be manually obtained thanks to knob 109 located on the hub side opposite to bore 134 where the set of sprocket wheels is mounted.

An epicycloidal gear system is provided to make easier the rotation and the locking of ring nut 108 in support 120 through knob 109. More particularly, knob 109 comprises an elongated portion 178 in which a pinion 150 is formed. That pinion engages three gears 152 arranged at 120° relative to each other and rotatably mounted through screws 180 onto a circumferential edge 156 provided on ring nut 108, on the side opposite to shaft 174.

A seat 172 is formed in cylindrical portion 110 of body 102 and it has an inner surface provided with teeth capable of coupling with the teeth of gears 152.

Knob 109 is retained within body 102 by a metal ring 158 that engages a corresponding groove provided in cylindrical portion 110 of body 102.

Moreover, an O-ring 160 made of rubber is provided between the body of knob 109 and the seat provided in portion 110 to seal the inside of body 102.

Internally of seat 172, between knob 109 and a shim ring 154, a spring 138 is wound around the portion of the body of knob 109 housed in seat 172, in order to allow ring nut 108 to move backward towards knob 109 at the beginning of the mounting operation. Thus, threaded shaft 174 can be screwed into bore 119 while allowing support 120 to take its engagement position in conical seat 111.

When ring nut 108 is to be rotated, knob 109 will be rotated thereby rotating gears 152 and, consequently, ring nut 108 with a reduction ration of about 1:3.

Support 120 has moreover a circumferential portion 124 to which disk 123 of the disk brake is fastened through screws 170.

Peripheral holes 125 are provided on the periphery of body 102 in conical seat 111, and three pins 136 arranged at 120° relative to each other project from said holes, in order to allow the coupling with corresponding circular seats 127 provided in support 120, when the latter is being secured to hub 101. Advantageously, the number of circular seats 127 is such as to allow automatic centring of the hub when mounting body 102 into support 120.

According to the invention, the match and the movement between the two coupled members, namely body 102 and support 120, which conventionally are obtained through the use of a key, are ensured by the male-female toothing system consisting of the aforementioned pins 126 co-operating with circular seats 127. Such a system allows complying with a proportional rotation ratio between the two members, and moreover it does not limit the coupling to a single position, thereby making the wheel replacement operation still faster.

Hereinafter the demounting of the hub assembly according to the second embodiment of the invention will be described. Such demounting comprises rotating knob 109 to release body 102 from support 120, by unscrewing threaded shaft 174 from bore 119, and removing the wheel from the hub.

Conversely, when mounting the wheel, knob 109 is rotated to screw threaded shaft 174 into the threaded seat in support 120 until the shaft is completely locked.

Even if the invention has been disclosed with reference to a presently preferred embodiment, other applications and modifications can be envisaged and they are included in the scope of the invention, as it will be clear for the skilled in the art.

## Claims

1. A quickly demountable hub assembly for a cycle wheel mounted on the arm of a single-tube fork, comprising:
- a body (2; 102) having an axial bore (10; 110) including an axial conical seat (111), the cycle wheel being mounted on said body;
- a support (20; 120) comprising a cylindrical portion (21; 121), mounted on the arm (3; 103) of said single-tube fork and bearing at least one sprocket wheel for the chain, and a conical portion (22; 122) which can be inserted into said conical seat (11; 111) and has a head equipped with engagement means (19; 119) with which a closing member (8; 108) engages, said closing member being capable of taking an engagement position, in which the body and the support are joined together, and a release position, in which the body (2; 102) can be released from said support (20; 120).

2. A hub assembly according to claim 1, **characterised in that** said engagement means comprise an enlarged head (19) and **in that** said closing member comprises a resilient clamp (8) mounted in said axial bore (10) through a cylindrical sleeve (12) and arranged to engage said enlarged head (19), the opening and closing of said clamp being obtained though an axial movement of said clamp.

3. A hub assembly according to claim 2, **characterised in that** the axial movement of said clamp (8) is controlled by a cam lever (9).

4. A hub assembly according to claim 2 or 3, **characterised in that** said clamp (8) comprises a substantially bell-shaped hollow body provided with slits (39) for allowing expansion and contraction of said clamp.

5. A hub assembly according to claim 1, **characterised in that** said engagement means comprise a threaded bore (119) and **in that** said closing member comprises a rotatable ring nut (108) having a threaded shaft (174) which is fitted and screwed into said threaded bore (119) by rotating said ring nut (108).

6. A hub assembly according to claim 5, **characterised in that** the rotation of said ring nut (108) is controlled by a knob (109) through an epicycloidal reduction gear system (150, 152).

7. A hub assembly according to claim 6, **characterised in that** said knob (109) comprises an elongated portion (178) in which a pinion (150) is formed that, by pressing said knob (109), engages a set of gears (152) circumferentially arranged on a circumferential edge (156) provided on the ring nut (108), on the side opposite to the threaded shaft (174).

8. A hub assembly according to claim 7, **characterised in that** between said knob (109) and said gear set (152) there are provided a shim ring (154) as well as a spring (138) allowing the ring nut (108) to move backward towards the knob (109) when the threaded shaft (174) is to be screwed into the bore (119), while maintaining the support (120) in the conical seat (111).

9. A hub assembly according to any preceding claim, **characterised in that** said hub (1; 101) comprises a body (2; 102) and a hollow cylindrical portion (4; 104), of which the turned peripheral edge has holes where the ends of the wheel spokes (5; 105) engage.

10. A hub assembly according to any preceding claim, **characterised in that** said support (20; 120) has a circumferential portion (24; 124) provided with holes for fastening the disk (23; 123) of the disk brake.

11. A hub assembly according to any preceding claim, **characterised in that** said body (2; 102) has peripheral holes (25; 125) from which pins (26; 126) project for coupling with corresponding circular seats (27; 127) provided in the support (20; 120) when the latter is being secured to the hub.

12. A hub assembly according to any preceding claim, **characterised in that** said single-tube fork (3; 103) is mounted on said cylindrical portion (21; 121) of said support (20; 120) by means of bearings.
